# FASCICULE DE BREVET EUROPEEN

(11) **EP 3 476 747 B1**
(45) Date de publication et mention de la délivrance du brevet: **23.12.2020**
(21) Numéro de dépôt: 18199392.4
(22) Date de dépôt: 09.10.2018
(51) Int. Cl.: B64F 5/10, B64F 5/50, B64C 1/18

(54) **SYSTÈME D'OUTILLAGE DESTINÉ À LA MANIPULATION D'AU MOINS UN MODULE SUPÉRIEUR ET D'AU MOINS UN MODULE INFÉRIEUR**
WERKZEUGSYSTEM ZUR HANDHABUNG VON MINDESTENS EINEM OBEREN MODUL UND MINDESTENS EINEM UNTEREN MODUL
TOOLING SYSTEM FOR THE HANDLING OF AT LEAST ONE UPPER MODULE AND AT LEAST ONE BOTTOM MODULE

(30) Priorité: 24.10.2017 FR 1760040
(43) Date de publication de la demande: 01.05.2019
(73) Titulaire: Airbus (S.A.S.), 31700 Blagnac (FR)
(72) Inventeur: BRINDEAU, Jean-Mickael, 31700 Blagnac (FR); AQUILA, André, 31700 Cornebarrieu (FR)
(74) Mandataire: Gicquel, Olivier Yves Gérard

(56) Documents cités:
- EP-A1- 2 809 580
- WO-A2-2008/010159
- AU-A- 1 443 070
- FR-A1- 3 048 235
- US-A- 3 709 322
- US-A1- 2001 054 228
- US-A1- 2006 180 704

## Description

### DOMAINE TECHNIQUE

La présente invention concerne un système d'outillage destiné à la manipulation d'au moins deux modules sur une surface.

### ÉTAT DE LA TECHNIQUE

Le montage d'un aéronef peut comprendre la manipulation précise de modules dans des logements confinés et étroits. Généralement, cette manipulation de modules demande le montage et le démontage de système permettant cette manipulation.

Le document FR 3 048 235 décrit un système d'outillage permettant la manipulation de modules, tels que l'introduction d'un plancher (« floor » en anglais) dans un fuselage d'aéronef. Ce système d'outillage nécessite le montage et le démontage de poutrelles supérieures dans l'aéronef, le montage et le démontage de poutrelles inférieures sur le module à introduire ainsi que le montage et le démontage d'éléments de sustentation reliant les poutrelles inférieures aux poutrelles supérieures. Par ailleurs, il ne permet pas de manipuler plus d'un module à la fois. Ces exigences entraînent généralement des temps de montages importants.

Le document US 2006/180704 A1 décrit un système de manutention de matériaux qui peut être utilisé dans un mode de transport et d'assemblage / démontage pour charger des structures de plancher de passagers dans le tube du fuselage lors de l'assemblage d'un aéronef.

### EXPOSÉ DE L'INVENTION

La présente invention a pour objet de pallier ces inconvénients en proposant un système d'outillage contribuant à réduire le temps de montage sans passer outre les exigences de précision de la manipulation des modules.

À cet effet, l'invention concerne un système d'outillage mobile destiné à la manipulation sur une surface de déplacement d'au moins un module supérieur et/ou au moins un module inférieur à introduire dans un logement afin d'être fixés dans le ogement.

Selon l'invention, le système d'outillage comprend :
- un bras présentant un dispositif de fixation supérieur agencé pour fixer au bras dans un plan supérieur au moins un module supérieur à manipuler et un dispositif de fixation inférieur agencé pour fixer au bras dans un plan inférieur au moins un module inférieur à manipuler, le bras étant destiné à être introduit dans le logement avec le ou les modules supérieurs et/ou le ou les modules inférieurs ;
- un premier dispositif de maintien du bras destiné à commander le positionnement du bras ;
   le bras étant monté en porte-à-faux sur le premier dispositif de maintien, le premier dispositif de maintien comprenant une plateforme hexapode sur laquelle est monté le bras.

Ainsi, grâce au bras monté en porte-à-faux sur le premier dispositif de maintien, le système d'outillage permet de manipuler au moins un module sans la nécessité de monter et de démonter des éléments du système d'outillage dans l'aéronef.

Avantageusement, le bras comprend :
- une partie centrale,
- un deuxième dispositif de maintien destiné à fixer le dispositif de fixation inférieur à la partie centrale,
- un troisième dispositif de maintien destiné à fixer le dispositif de fixation inférieur à la partie centrale.

Selon une particularité, le deuxième dispositif de maintien comprend une première pluralité d'actionneurs et le troisième dispositif de maintien comprend une deuxième pluralité d'actionneurs.

Selon une autre particularité, le système d'outillage comprend au moins un capteur d'inclinaison destiné à générer des signaux représentatifs de l'inclinaison du plan supérieur et du plan inférieur par rapport au plan de déplacement, le premier dispositif de maintien et/ou les pluralités d'actionneurs étant agencés pour commander l'inclinaison du plan supérieur et du plan inférieur par rapport au plan de déplacement à partir des signaux représentatifs de l'inclinaison du plan supérieur et du plan inférieur par rapport au plan de déplacement.

En outre, le système d'outillage comprend au moins un capteur de déformation destiné à générer des signaux représentatifs de la déformation du ou des modules inférieurs fixés au dispositif de fixation inférieur et/ou du ou des modules supérieurs fixés au dispositif de fixation supérieur, la première pluralité d'actionneurs étant agencée pour ajuster la géométrie du ou des modules inférieurs fixés au dispositif de fixation inférieur à partir des signaux représentatifs de la déformation du ou des modules inférieurs fixés au dispositif de fixation inférieur, la deuxième pluralité d'actionneurs étant agencée pour ajuster la géométrie du ou des modules supérieurs fixés au dispositif de fixation supérieur à partir des signaux représentatifs de la déformation du ou des modules supérieurs fixés au dispositif de fixation supérieur.

Par ailleurs, le dispositif de fixation inférieur comprend une grille fixée à une partie centrale du bras par la deuxième pluralité d'actionneurs, la grille étant destinée à fixer un ou des modules inférieurs à manipuler.

En outre, le dispositif de fixation supérieur comprend une pluralité de supports fixés à une partie centrale du bras par la première pluralité d'actionneurs, la pluralité de supports étant destinés à fixer un ou des modules supérieurs à manipuler.

Selon une autre particularité, le système d'outillage comprend en outre un dispositif de roulage du système d'outillage destiné à déplacer et guider le système d'outillage sur la surface de déplacement, le premier dispositif de maintien du bras étant monté entre le bras et le dispositif de roulage.

De plus, le système d'outillage comprend en outre au moins un capteur de distance destiné à générer des signaux représentatifs d'une distance entre, d'une part, le ou les modules supérieurs et/ou le ou les modules inférieurs fixés sur le bras et/ou le système d'outillage et, d'autre part, le logement, le dispositif de roulage et le premier dispositif de maintien étant agencés pour commander le positionnement du ou des modules inférieurs et/ou du ou des modules supérieurs par rapport au logement pour insérer le ou les modules dans le logement.

Avantageusement, le bras comprend une surface de marche destinée à recevoir au moins un opérateur.

L'invention concerne également un procédé d'utilisation du système d'outillage tel que décrit ci-dessus pour introduire au moins un module supérieur et/ou au moins un module inférieur dans un logement afin d'être fixés dans le logement.

Selon l'invention, le procédé comprend au moins des deux étapes suivantes :
- une étape de fixation du ou des modules supérieurs au bras, dans le plan supérieur, par le dispositif de fixation supérieur ;
- une étape de fixation du ou des modules inférieurs au bras, dans le plan inférieur, par le dispositif de fixation inférieur ;
le procédé comprenant en outre au moins une étape de positionnement du bras par le premier dispositif de maintien pour introduire le ou les modules dans le logement.

En outre, le procédé comprend une étape d'ajustement de la géométrie du ou des modules inférieurs par le deuxième dispositif de maintien à l'aide de la première pluralité d'actionneurs et/ou une étape d'ajustement de la géométrie du ou des modules supérieurs par le troisième dispositif de maintien à l'aide de la deuxième pluralité d'actionneurs.

De plus, le procédé comprend en outre :
- une étape de déplacement du système d'outillage par le dispositif de roulage de façon que le système d'outillage soit amené à l'entrée du logement ;
- une étape d'introduction et d'alignement du ou des modules supérieurs et/ou du ou des modules inférieurs consistant à aligner le ou les modules supérieurs et/ou le ou les modules inférieurs par rapport au logement à l'aide du dispositif de maintien et de l'introduction du ou des modules supérieurs et/ou du ou des modules inférieurs à l'aide du dispositif de roulage.

Par ailleurs, le procédé comprend :
- une étape de positionnement dans le logement du ou des modules supérieurs et/ou du ou des modules inférieurs, et
- une étape de fixation dans le logement du ou des modules supérieurs et/ou du ou des modules inférieurs.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue en perspective d'un mode de réalisation du système d'outillage,
- la figure 2 représente un détail du système d'outillage en perspective, notamment l'agencement d'un actionneur du système d'outillage,

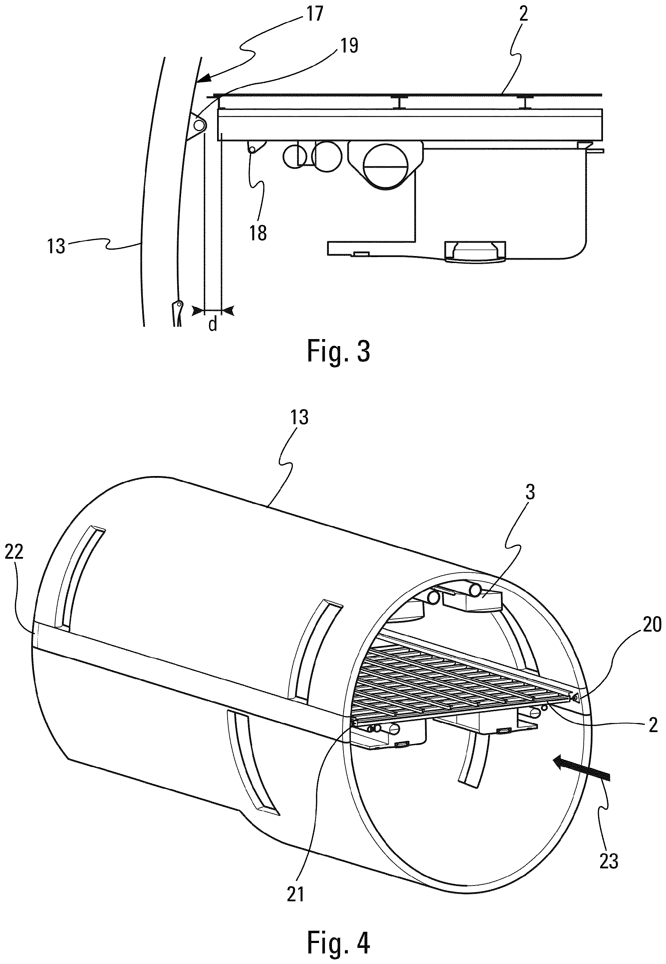

- la figure 3 représente une coupe transversale du système d'outillage montrant un module inférieur au voisinage d'un logement au moment de l'introduction du module inférieur dans ledit logement,
- la figure 4 représente une vue en perspective montrant les modules inférieurs et supérieurs fixés dans le logement,

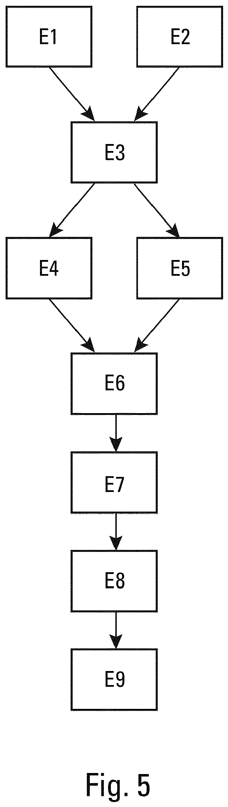

- la figure 5 représente un logigramme schématique du procédé d'utilisation du système d'outillage.

### DESCRIPTION DÉTAILLÉE

La suite de la description fera référence aux figures citées ci-dessus.

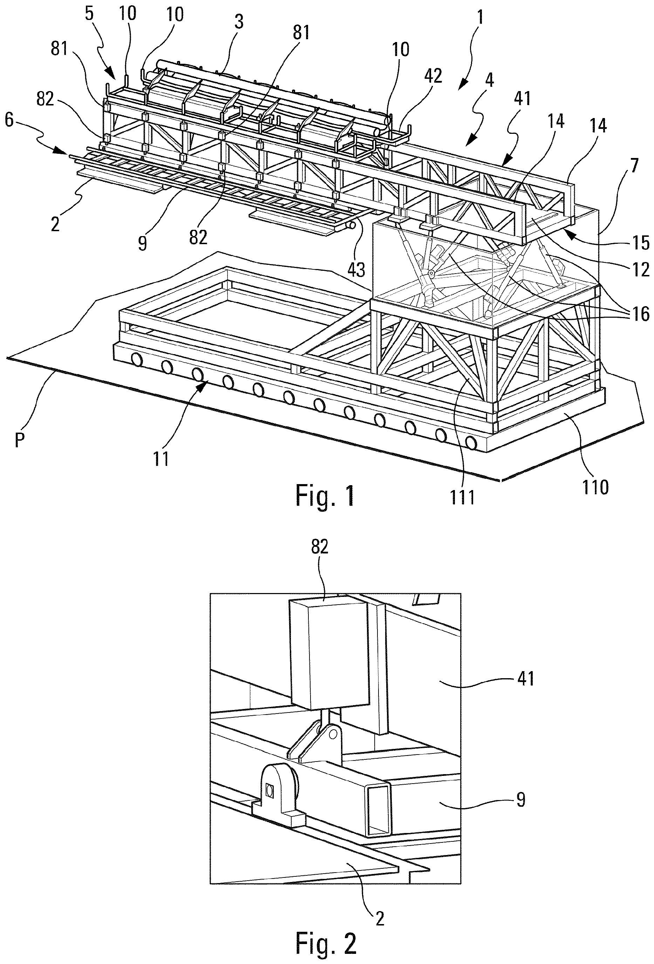

La figure 1 représente un mode de réalisation du système d'outillage 1 destiné à la manipulation de modules 2, 3.

Le système d'outillage 1 est mobile.

Il permet de manipuler sur une surface de déplacement P, par exemple un plan horizontal, notamment :
- au moins un module supérieur 3 ou au moins un module inférieur 2 à introduire dans un logement 13,
- ou bien, au moins un module supérieur 3 et au moins un module inférieur 2 à introduire dans un logement 13.

Un module inférieur 2 peut correspondre à un plancher d'aéronef.

Un module supérieur 3 peut correspondre à une partie supérieure (« crown » en anglais) fixée au sommet d'un fuselage 13 permettant le passage de gaines techniques ou de câblage dans le fuselage 13.

Le système d'outillage 1 comprend un dispositif de maintien 7 et un bras 4 monté en porte-à-faux sur le dispositif de maintien 7 du bras 4. Le bras 4 est destiné à être introduit dans le logement 13 avec le ou les modules supérieurs 3 et/ou le ou les modules inférieurs 2. Le fait que le bras 4 soit monté en porte-à-faux facilite l'introduction des modules 2 et/ou 3 dans le logement 13.

Le bras 4 présente un dispositif de fixation supérieur 5 agencé pour fixer au bras 4, dans un plan supérieur, au moins un module supérieur 3 à manipuler et un dispositif de fixation inférieur 6 agencé pour fixer au bras 4, dans un plan inférieur, au moins un module inférieur 2 à manipuler.

Lors de la manipulation du ou des modules 2 et/ou 3, le bras 4 permet d'introduire dans le logement 13 le ou les modules supérieurs 3 et/ou le ou les modules inférieurs 2.

De préférence, le bras 4 possède une rigidité importante afin qu'il ne présente pas de déflection importante causée par sa propre masse.

Avantageusement, le bras 4 comprend une surface de marche 12 destinée à recevoir au moins un opérateur.

Selon un mode de réalisation, illustré par la figure 1, le bras 4 présente une forme générale en U. Il comprend une âme formant la base du U et deux ailes 14 parallèles formant les pattes du U. L'âme est destinée à jouer le rôle de la surface de marche 12. Les ailes 14 forment chacune un assemblage mécano-soudé en treillis permettant d'obtenir une grande rigidité du bras 4.

Le dispositif de maintien 7 du bras 4 est notamment destiné à commander le positionnement du bras 4.

De façon non limitative, le dispositif de maintien 7 permet de commander l'inclinaison transversale et/ou longitudinale du bras 4 par rapport au plan de déplacement P. Ainsi, le dispositif de maintien 7 autorise des mouvements correctifs latéraux, verticaux et de torsion du bras 7.

Comme illustré sur a figure 1, le dispositif de maintien 7 comprend une plateforme hexapode (« hexapod platform » en anglais) sur lequel est monté le bras 4. La plateforme hexapode est formée d'une plateforme 15 sur laquelle est fixé le bras 4 et de six actionneurs linéaires 16 permettant de varier l'orientation de la plateforme 15 selon six degrés de liberté.

Selon un mode de réalisation, le bras 4 comprend :
- une partie centrale 41,
- un dispositif de maintien 43 destiné à fixer le dispositif de fixation inférieur 6 du bras 4 (dans le plan inférieur) à la partie centrale 41,
- un dispositif de maintien 42 destiné à fixer le dispositif de fixation supérieur 5 du bras 4 (dans le plan supérieur) à la partie centrale 41.

Malgré la rigidité du bras 4, il peut exister une déflexion de celui-ci. Cette déflexion est généralement causée par la propre masse du bras 4 monté en porte-à-faux. La masse du ou des modules 2, 3 fixés sur le bras 4 peuvent également contribuer à la déflexion du bras 4.

Le dispositif de maintien 42 et le dispositif de maintien 43 peuvent compenser cette déflexion du bras 4.

Dans un mode préféré de réalisation, le dispositif de maintien 42 comprend une pluralité d'actionneurs 81 et le dispositif de maintien 43 comprend une pluralité d'actionneurs 82.

Les actionneurs 81 et 82 peuvent être manuels ou automatiques.

Avantageusement, le système d'outillage 1 comprend au moins un capteur d'inclinaison (non représenté). Ce ou ces capteurs d'inclinaison sont destinés à générer des signaux représentatifs de l'inclinaison du plan supérieur et du plan inférieur (donc du ou des modules supérieurs 3 et/ou du ou des modules inférieurs 2) par rapport au plan de déplacement P. Le dispositif de maintien 7 et/ou les pluralités d'actionneurs 81 et 82 sont agencés pour commander l'inclinaison du plan supérieur et du plan inférieur avec la surface de déplacement P à partir des signaux représentatifs de l'inclinaison du plan supérieur et du plan inférieur par rapport au plan de déplacement P. Ainsi, lorsque l'inclinaison du plan inférieur et du plan supérieur mesurée par le ou les capteurs d'inclinaison ne correspond pas à une inclinaison souhaitée, le dispositif de maintien 7 et/ou les pluralités d'actionneurs 81 et 82 sont activés pour bouger le bras 4 jusqu'à ce que le ou les capteurs d'inclinaison mesurent une inclinaison qui corresponde l'inclinaison souhaitée.

Dans le mode de réalisation représenté sur la figure 1, le ou les capteurs d'inclinaison envoient un signal à la plateforme hexapode et/ou aux pluralités d'actionneurs 81 et 82. Si l'inclinaison ne correspond pas à l'inclinaison souhaitée, les actionneurs 16 de la plateforme hexapode et/ou les actionneurs des pluralités d'actionneurs 81 et 82 sont activés jusqu'à ce que le ou les capteurs d'inclinaison mesurent une inclinaison correspondant à l'inclinaison souhaitée. Les mesures d'inclinaison déterminées par le ou les capteurs d'inclinaison et l'inclinaison souhaitée peuvent être envoyées à un calculateur qui génère des commandes qui permettent au bras d'avoir une inclinaison correspondant à l'inclinaison souhaitée à partir de l'inclinaison qui a été mesurée par le ou les capteurs d'inclinaison. Ces commandes sont alors envoyées à la plateforme hexapode et/ou aux pluralités d'actionneurs 81 et 82. Les actionneurs 16 de la plateforme hexapode et/ou les actionneurs des pluralités d'actionneurs 81 et 82 sont ainsi activés en fonction desdites commandes.

Avantageusement, le système d'outillage 1 comprend au moins un capteur de déformation (non représenté) destiné à générer des signaux représentatifs de la déformation du ou des modules inférieurs 2 fixés au dispositif de fixation inférieur 6 et/ou des modules supérieurs 3 fixés au dispositif de fixation supérieur 5.

La pluralité d'actionneurs 82 peut être également agencée pour ajuster la géométrie du ou des modules inférieurs 2 fixés au dispositif de fixation inférieur 6 à partir des signaux représentatifs de la déformation du ou des modules inférieurs 2 fixés au dispositif de fixation inférieur 6.

De même, la pluralité d'actionneurs 81 peut être agencée pour ajuster la géométrie du ou des modules supérieurs 3 fixés au dispositif de fixation supérieur 5 à partir des signaux représentatifs de la déformation du ou des modules supérieurs 3 fixés au dispositif de fixation supérieur 5.

Ainsi, après que le ou les modules inférieurs 2 ont été fixés au dispositif de fixation inférieur 6 et/ou les modules supérieurs 3 ont été fixés au dispositif de fixation supérieur 5, la pluralité d'actionneurs 82 et/ou la pluralité d'actionneurs 81 ajuste la géométrie du ou des modules inférieurs 2 et/ou du ou des modules supérieurs 3 afin que le ou les modules inférieurs et/ou les modules supérieurs 3 présentent une géométrie idéale, par exemple une planéité suffisante pour l'insertion du ou des modules inférieurs 2 et/ou du ou des modules supérieurs 3 dans le logement 13. Chacun des actionneurs 82 de la pluralité d'actionneurs 82 et chacun des actionneurs 81 de la pluralité d'actionneur 81 sont également configuré pour pouvoir être activé localement afin de pouvoir aligner un ou plusieurs éléments de fixations 18 du ou des modules inférieurs 2 au ou aux éléments de fixation 19 du logement 13 destinés à être fixés auxdits éléments de fixation 18 du ou des modules inférieurs 2.

Chaque actionneur 81 ou 82 agit individuellement afin de compenser localement la déflexion ou les déformations du bras. La géométrie du ou des modules 2 et/ou 3 est donc maintenue par les pluralités d'actionneurs 81 ou 82 qui font en sorte que la déflexion ou les déformations du bras 4 soient compensées par leur activation.

Si la rigidité du bras 4 est suffisante pour qu'il ne soit pas déformé par sa propre masse et/ou par la masse du ou des modules 2 et/ou 3, la mise en œuvre des pluralités d'actionneurs 81 et 82 n'est pas nécessaire pour compenser la déformation du bras 4.

Dans le mode de réalisation de la figure 1, les actionneurs 81, 82 sont répartis régulièrement le long du bras 4.

Avantageusement, le nombre de capteurs de déformation et le nombre d'actionneurs 81 ou 82 nécessaires au maintien de la géométrie du ou des modules inférieurs 2 et/ou du ou des modules supérieurs 3 est adapté en fonction de la rigidité bras 4 et du besoin de précision du positionnement finale du ou des modules inférieurs 2 ou/et du ou des modules supérieurs 3. Ce nombre peut être égal à zéro si la rigidité du bras est suffisante à la précision souhaitée. Inversement, le nombre de capteurs de déformation et d'actionneurs 81 ou 82 peut être important pour manipuler des modules 2 ou 3 très longs qui doivent être positionnés très précisément.

Le dispositif de fixation inférieur 6 peut comprendre une grille 9 fixée à la partie centrale 41 du bras 4 par la pluralité d'actionneurs 82. La grille 9 est destinée à fixer un ou des modules inférieurs 2 à manipuler.

De même, le dispositif de fixation supérieur 5 peut comprendre une pluralité de supports 10 fixés à la partie centrale 41 du bras 4 par la pluralité d'actionneurs 81. La pluralité de supports 10 est destinée à fixer un ou des modules supérieurs 3 à manipuler.

Afin de déplacer le système d'outillage 1, ce dernier comprend en outre un dispositif de roulage 11 du système d'outillage 1 destiné à déplacer et guider le système d'outillage 1 sur la surface de déplacement P. Le dispositif de maintien 7 du bras 4 est monté entre le bras 4 et le dispositif de roulage 11.

Le dispositif de roulage 11 peut également comprendre une plateforme de roulage 110 surmontée d'un assemblage mécano-soudé 111 sur lequel est fixé le dispositif de maintien 7. La plateforme de roulage 110 est, par exemple, montée sur roues.

Le déplacement du système d'outillage 1 par le dispositif de roulage 11 peut être réalisé manuellement, de manière automatique ou de manière téléguidée.

Avantageusement, le système d'outillage 1 comprend en outre au moins un capteur de distance (non représenté), ou autrement appelé capteur de proximité, destiné à générer des signaux représentatifs d'une distance d entre, d'une part, le ou les modules supérieurs 3 et/ou le ou les modules inférieurs 2 fixés sur le bras et, d'autre part, le logement 13. Le ou les capteurs de distance peuvent également être destinés à générer des signaux représentatifs de la distance d entre le système d'outillage 1 et le logement 13. Le dispositif de roulage 11 et le premier dispositif de maintien 7 sont également agencés pour commander le positionnement du ou des modules inférieurs 3 et/ou du ou des modules supérieurs 2 et/ou du système d'outillage 1 par rapport au logement 13 à partir desdits signaux représentatifs d'une distance. Ainsi, lorsque la distance d entre, d'une part, le ou les modules 2 et/ou 3 et/ou le système d'outillage et, d'autre part, le logement 13 est inférieure à une distance prédéterminée, le dispositif de roulage 11 et le dispositif de maintien 7 modifie le positionnement du ou des modules 2 et/ou 3 et/ou du système d'outillage 1 afin que la distance d soit supérieure à la distance prédéterminée. De la même manière que le ou les capteurs d'inclinaison, les mesures de distance d déterminées par le ou les capteurs de distance peuvent être envoyées à un calculateur qui génère des commandes qui permettent au bras d'avoir positionnement correspondant à un positionnement du bras 4 pour lequel la distance d entre, d'une part, le ou les modules 2 et/ou 3 et/ou le système d'outillage 1 et, d'autre part, le logement 13 soit supérieure à la distance prédéterminée. Ces commandes sont alors envoyées à la plateforme hexapode et au dispositif de roulage 11. Les actionneurs 16 de la plateforme hexapode sont ainsi activés en fonction desdites commandes. De même, le dispositif de roulage 11 déplace le système d'outillage 1 en fonction desdites commandes.

Par exemple, le ou les capteurs de distance correspondent à des capteurs laser placés sur le bras 4 qui contrôlent la distance entre le système d'outillage 1 et le fuselage à l'aide d'une règle référence positionnée sur le fuselage.

Le système d'outillage 1 peut être utilisé pour introduire au moins un module supérieur 3 et au moins un module inférieur 2 simultanément dans un logement 13 afin d'être fixés dans le logement 13. Le système d'outillage 1 peut également être utilisé pour introduire un seul module : soit un module supérieur 3 ou un module inférieur 2.

Le logement 13 peut correspondre au fuselage d'un aéronef. En outre, comme décrit précédemment, le module inférieur 2 peut correspondre à un plancher d'aéronef. Le module supérieur 3 peut correspondre à une partie supérieure fixée au sommet du fuselage permettant le passage de gaines techniques ou de câblage dans le fuselage.

Le procédé comprend au moins l'une des deux étapes suivantes :
- une étape E1 de fixation du ou des modules supérieurs 3 au bras 4, dans le plan supérieur, par le dispositif de fixation supérieur 5 ;
- une étape E2 de fixation du ou des modules inférieurs 2 au bras 4, dans le plan inférieur, par le dispositif de fixation inférieur 6 ;

Le procédé comprend en outre au moins une étape E3 de positionnement du bras 4 par le dispositif de maintien 7 pour introduire le ou les modules 2 et/ou 3 dans le logement 13.

L'étape E1 de fixation du ou des modules supérieurs 3 peut être réalisée simultanément à l'étape E2 de fixation du ou des modules inférieurs 2.

Le procédé peut comprendre en outre une étape E5 d'ajustement de la géométrie du ou des modules supérieurs 3 par le dispositif de maintien 42.

De même, le procédé peut comprendre une étape E4 d'ajustement de la géométrie du ou des modules inférieurs 2 par le dispositif de maintien 43.

Ces étapes d'ajustements E4 et E5 permettent d'ajuster la géométrie des modules 2 ou 3 afin qu'ils ne subissent pas une déformation causée par une déflexion éventuelle du bras 4. Les pluralités d'actionneurs 81 ou 82 des dispositifs de maintien 42 ou 43 compensent localement la déflexion éventuelle du bras 4.

Avantageusement, le procédé comprend en outre une étape E6 de déplacement du système d'outillage 1 par le dispositif de roulage 11 afin que le système d'outillage soit amené à l'entrée du logement 13 pour que le ou les modules inférieurs 2 et/ou le ou les modules supérieurs 3 soient prêts à être introduits dans le logement 13.

Pendant l'étape E6 de déplacement, le dispositif de roulage 11 peut être mise en œuvre de manière automatique.

Afin de garantir d'une introduction sécurisée des modules 2, 3 dans le logement 13, la distance d entre les modules 2, 3 et les parois intérieurs 17 du logement 13 lors de l'introduction des modules 2, 3 est contrôlée grâce à l'action du dispositif de maintien 7 et du dispositif de roulage 11. Le dispositif de maintien 7 assure des mouvements correctifs latéraux, verticaux et de torsion et le dispositif de roulage 11 assure des mouvements correctifs latéraux et longitudinaux afin que ladite distance d ne soit pas inférieure à une distance prédéterminée. De manière non limitative, la distance d entre les modules et le logement n'est pas inférieure à 50 mm tout le long des modules 2, 3. L'action du dispositif de maintien 7 et du dispositif de roulage 11 permet également de tenir compte de la distance d entre le système d'outillage 1 et le logement 13.

Pour cela, le procédé peut comprendre une étape E7 d'introduction et d'alignement du ou des modules supérieurs 3 et/ou du ou des modules inférieurs 2. L'étape E7 consiste à aligner le ou les modules supérieurs 3 et/ou le ou les modules inférieurs 2 par rapport au logement à l'aide du premier dispositif de maintien 7. Le ou les capteurs de distances permettent que le ou les modules inférieurs 2 et/ou les modules supérieurs 3 et/ou le système d'outillage 1 ne heurtent pas le logement 13 lors de l'introduction des modules 2 et/ou 3 dans le logement. L'étape E7 consiste également à l'introduction du ou des modules supérieurs 3 et/ou du ou des modules inférieurs 2 à l'aide du dispositif de roulage 11.

Après que les modules 2, 3 ont été introduits complètement dans le logement 13, le procédé comprend alors une étape E8 de positionnement dans le logement 13 du et/ou des modules supérieurs 3 et du ou des modules inférieurs 2.

Le positionnement des modules 2, 3 est effectué de façon précise afin que les éléments de fixation 18 des modules 2, 3 soient alignés avec les éléments de fixation 19 de la paroi intérieure 17 du logement 13 selon un seuil de tolérance défini par le type de fixation.

Le positionnement est d'abord assuré par le dispositif de maintien 7 qui aligne quelques éléments de fixation 18 des modules 2, 3 avec les éléments de fixation 19 de la paroi intérieure 17 du logement 13.

Puis, chacun des actionneurs 81, 82 des pluralités d'actionneurs du dispositif de maintien 42 et du dispositif de maintien 43 peut être actionné individuellement par un opérateur afin d'ajuster localement les positions de tous les éléments de fixation 18 des modules 2 ou 3 par rapport aux éléments de fixation 19 de la paroi intérieure 17 du logement 13. L'ajustement peut être de l'ordre de 1 mm à 2 mm selon les éléments de fixation 18 ou 19.

Selon un exemple, l'actionnement est réalisé localement à distance à partir d'une tablette portable.

Selon un autre exemple, l'actionnement est réalisé manuellement. Dans le cas d'un actionnement manuel, l'ajustement peut être effectué à l'aide d'une molette d'ajustement manuel.

Selon un mode de réalisation, le dispositif de maintien 7 permet l'alignement précise de trois éléments de fixation 18 des modules avec trois éléments de fixation 19 de la paroi intérieure 17 du logement 13 en utilisant les six degrés de liberté apportés par le dispositif de maintien 7. Par exemple, les trois éléments de fixation 18 correspondent, respectivement, à deux éléments de fixation 20, 21 à l'entrée du logement 13 et à un élément de fixation 22 à la sortie du logement 13 dans le sens d'introduction 23 des modules 2, 3. Les autres éléments de fixation 18 des modules 2 ou 3 sont approchés des autres éléments de fixation 19 par l'actionnement local des actionneurs 81, 82.

Les modules 2 ou 3 sont alors prêts à être fixés sur la paroi intérieure 17 du logement 13 lors d'une étape E9 de fixation du procédé. Pour l'étape E9 de fixation, des opérateurs peuvent pénétrés dans le logement 13 afin de fixer les modules 2 ou 3 sur la paroi intérieure 17 du fuselage. La surface de marche 12 du bras 4 permet aux opérateurs d'atteindre les éléments de fixation 19 du module supérieur 3.

La fixation du ou des modules inférieurs 2 peut être réalisée simultanément à la fixation du ou des modules supérieurs 3.

Selon un mode de réalisation préféré, afin de stabiliser la surface de marche 12, le ou les modules inférieurs 2 sont préalablement fixés au logement 13 à quelques éléments de fixation du ou des modules inférieurs. Les opérateurs peuvent alors rejoindre les éléments du ou des modules supérieurs 3 pour fixer le ou les modules supérieurs 3 au logement 13.

## Revendications

1. Système d'outillage mobile destiné à la manipulation sur une surface de déplacement (P) d'au moins un module supérieur (3) et/ou au moins un module inférieur (2) à introduire dans un logement (13) afin d'être fixés dans le logement, le système comprenant
- un bras (4) présentant un dispositif de fixation supérieur (5) agencé pour fixer au bras (4) dans un plan supérieur au moins un module supérieur (3) à manipuler et un dispositif de fixation inférieur (6) agencé pour fixer au bras (4) dans un plan inférieur au moins un module inférieur (2) à manipuler, le bras (4) étant destiné à être introduit dans le logement (13) avec le ou les modules supérieurs (3) et/ou le ou les modules inférieurs (2) ;
- un premier dispositif de maintien (7) du bras (4) destiné à commander le positionnement du bras (4) ;
le bras (4) étant monté en porte-à-faux sur le premier dispositif de maintien (7), le premier dispositif de maintien (7) comprenant une plateforme hexapode sur laquelle est monté le bras (4).

2. Système selon la revendication 1,
**caractérisé en ce que** le bras (4) comprend :
- une partie centrale (41),
- un deuxième dispositif de maintien (43) destiné à fixer le dispositif de fixation inférieur (6) à la partie centrale (41),
- un troisième dispositif de maintien (42) destiné à fixer le dispositif de fixation supérieur (5) à la partie centrale (41).

3. Système selon la revendication 2,
**caractérisé en ce que** le deuxième dispositif de maintien (43) comprend une première pluralité d'actionneurs (82) et le troisième dispositif de maintien (42) comprend une deuxième pluralité d'actionneurs (81).

4. Système selon la revendication 3,
**caractérisé en ce qu'**il comprend au moins un capteur d'inclinaison destiné à générer des signaux représentatifs de l'inclinaison du plan supérieur et du plan inférieur par rapport au plan de déplacement (P), le premier dispositif de maintien (7) et/ou les pluralités d'actionneurs (81, 82) étant agencés pour commander l'inclinaison du plan supérieur et du plan inférieur par rapport au plan de déplacement (P) à partir des signaux représentatifs de l'inclinaison du plan supérieur et du plan inférieur par rapport au plan de déplacement (P).

5. Système selon l'une quelconque des revendications 3 ou 4, **caractérisé en ce qu'**il comprend au moins un capteur de déformation destiné à générer des signaux représentatifs de la déformation du ou des modules inférieurs (2) fixés au dispositif de fixation inférieur (6) et/ou du ou des modules supérieurs (3) fixés au dispositif de fixation supérieur (5), la première pluralité d'actionneurs (82) étant agencée pour ajuster la géométrie du ou des modules inférieurs (2) fixés au dispositif de fixation inférieur (6) à partir des signaux représentatifs de la déformation du ou des modules inférieurs (2) fixés au dispositif de fixation inférieur (6), la deuxième pluralité d'actionneurs (81) étant agencée pour ajuster la géométrie du ou des modules supérieurs (3) fixés au dispositif de fixation supérieur (5) à partir des signaux représentatifs de la déformation du ou des modules supérieurs (3) fixés au dispositif de fixation supérieur (5).

6. Système selon l'une quelconque des revendications 3 à 5,
**caractérisé en ce que** le dispositif de fixation inférieur (6) comprend une grille (9) fixée à la partie centrale (41) du bras (4) par la deuxième pluralité d'actionneurs (82), la grille (9) étant destinée à fixer un ou des modules inférieurs (2) à manipuler.

7. Système selon l'une quelconque des revendications 3 à 6,
**caractérisé en ce que** le dispositif de fixation supérieur (5) comprend une pluralité de supports (10) fixés à la partie centrale (41) du bras (4) par la
première pluralité d'actionneurs (81), la pluralité de supports (10) étant destinée à fixer un ou des modules supérieurs (3) à manipuler.

8. Système selon l'une quelconque des revendications 1 à 7,
**caractérisé en ce qu'**il comprend en outre un dispositif de roulage (11) du système d'outillage (1) destiné à déplacer et guider le système d'outillage (1) sur la surface de déplacement (P), le premier dispositif de maintien (7) du bras (4) étant monté entre le bras (4) et le dispositif de roulage (11).

9. Système selon la revendication 8,
**caractérisé en ce qu'**il comprend en outre au moins un capteur de distance destiné à générer des signaux représentatifs d'une distance (d) entre, d'une part, le ou les modules supérieurs (3) et/ou le ou les modules inférieurs (2) fixés sur le bras et/ou le système d'outillage (1) et, d'autre part, le logement (13), le dispositif de roulage (11) et le premier dispositif de maintien (7) étant agencés pour commander le positionnement du ou des modules inférieurs (3) et/ou du ou des modules supérieurs (2) par rapport au logement (13) pour insérer le ou les modules (2, 3) dans le logement (13).

10. Système selon l'une quelconque des revendications 1 à 9,
**caractérisé en ce que** le bras (4) comprend une surface de marche (12) destinée à recevoir au moins un opérateur.

11. Procédé d'utilisation du système d'outillage selon l'une quelconque des revendication 1 à 10 pour introduire au moins un module supérieur (3) et/ou au moins un module inférieur (2) dans un logement (13) afin d'être fixés dans le logement (13), le procédé étant **caractérisé en ce qu'**il comprend au moins l'une des deux étapes suivantes :
- une étape (E1) de fixation du ou des modules supérieurs (3) au bras (4), dans le plan supérieur, par le dispositif de fixation supérieur (5) ;
- une étape (E2) de fixation du ou des modules inférieurs (2) au bras (4), dans le plan inférieur, par le dispositif de fixation inférieur (6) ;
le procédé comprenant en outre au moins une étape (E3) de positionnement du bras (4) par le premier dispositif de maintien (7) pour introduire le ou les modules (2, 3) dans le logement (13).

12. Procédé selon la revendication 11,
**caractérisé en ce qu'**il comprend en outre une étape (E4) d'ajustement de la géométrie du ou des modules inférieurs (2) par le deuxième dispositif de maintien (43) à l'aide de la première pluralité d'actionneurs (82) et/ou une étape (E5) d'ajustement de la géométrie du ou des modules supérieurs (3) par le troisième dispositif de maintien (42) à l'aide de la deuxième pluralité d'actionneurs (81).

13. Procédé selon l'une quelconque des revendications 11 ou 12, **caractérisé en ce qu'**il comprend en outre :
- une étape (E6) de déplacement du système d'outillage (1) par le dispositif de roulage (11) de façon que le système d'outillage (1) soit amené à l'entrée du logement (13) ;
- une étape (E7) d'introduction et d'alignement du ou des modules supérieurs (3) et/ou du ou des modules inférieurs (2) consistant à aligner le ou les modules supérieurs (3) et/ou le ou les modules inférieurs (2) par rapport au logement (13) à l'aide du premier dispositif de maintien (7) et de l'introduction du ou des modules supérieurs (3) et/ou du ou des modules inférieurs (2) à l'aide du dispositif de roulage (11).

14. Procédé selon l'une quelconque des revendications 11 à 13, **caractérisé en ce qu'**il comprend en outre :
- une étape (E8) de positionnement dans le logement (13) du ou des modules supérieurs (3) et/ou du ou des modules inférieurs (2), et
- une étape (E9) de fixation dans le logement (13) du ou des modules supérieurs (3) et/ou du ou des modules inférieurs (2).

## Patentansprüche

1. Mobiles Werkzeugsystem, das dazu bestimmt ist, zumindest ein oberes Modul (3) und/oder zumindest ein unteres Modul (2), das (die) in eine Aufnahme (13) eingeführt werden soll(en), um in der Aufnahme befestigt zu werden, auf einer Bewegungsebene (P) zu manipulieren, wobei das System Folgendes umfasst:
- einen Arm (4) mit einer oberen Befestigungsvorrichtung (5), die angeordnet ist, um zumindest ein zu manipulierendes oberes Modul (3) in einer oberen Ebene am Arm (4) zu befestigen, und einer unteren Befestigungsvorrichtung (6), die angeordnet ist, um zumindest ein zu manipulierendes unteres Modul (2) in einer unteren Ebene am Arm (4) zu befestigen, wobei der Arm (4) dazu bestimmt ist, mit dem (den) oberen Modul(en) (3) und/oder dem (den) unteren Modul(en) (2) in die Aufnahme (13) eingeführt zu werden;
- eine erste Vorrichtung (7) zum Halten des Arms (4), die dazu bestimmt ist, die Positionierung des Arms (4) zu steuern;
wobei der Arm (4) freitragend an der ersten Haltevorrichtung (7) montiert ist, wobei die erste Haltevorrichtung (7) eine hexapodische Plattform umfasst, auf der der Arm (4) montiert ist.

2. System nach Anspruch 1,
**dadurch gekennzeichnet, dass** der Arm (4) Folgendes umfasst:
- einen mittleren Teil (41),
- eine zweite Haltevorrichtung (43), die dazu bestimmt ist, die untere Befestigungsvorrichtung (6) am mittleren Teil (41) zu befestigen,
- eine dritte Haltevorrichtung (42), die dazu bestimmt ist, die obere Befestigungsvorrichtung (5) am mittleren Teil (41) zu befestigen.

3. System nach Anspruch 2,
**dadurch gekennzeichnet, dass** die zweite Haltevorrichtung (43) eine erste Vielzahl von Aktoren (82) umfasst und die dritte Haltevorrichtung (42) eine zweite Vielzahl von Aktoren (81) umfasst.

4. System nach Anspruch 3,
**dadurch gekennzeichnet, dass** es zumindest einen Neigungssensor umfasst, der dazu bestimmt ist, Signale zu erzeugen, die für die Neigung der oberen Ebene und der unteren Ebene in Bezug auf die Bewegungsebene (P) repräsentativ sind, wobei die erste Haltevorrichtung (7) und/oder die Vielzahlen von Aktoren (81, 82) angeordnet sind, um die Neigung der oberen Ebene und der unteren Ebene in Bezug auf die Bewegungsebene (P) anhand der für die Neigung der oberen Ebene und der unteren Ebene in Bezug auf die Bewegungsebene (P) repräsentativen Signale zu steuern.

5. System nach einem der Ansprüche 3 oder 4,
**dadurch gekennzeichnet, dass** es zumindest einen Verformungssensor umfasst, der dazu bestimmt ist, Signale zu erzeugen, die für die Verformung des (der) an der unteren Befestigungsvorrichtung (6) befestigten unteren Moduls (Module) (2) und/oder des (der) an der oberen Befestigungsvorrichtung (5) befestigten oberen Moduls (Module) (3) repräsentativ sind, wobei die erste Vielzahl von Aktoren (82) angeordnet ist, um die Geometrie des (der) an der unteren Befestigungsvorrichtung (6) befestigten unteren Moduls (Module) (2) anhand der für die Verformung des (der) an der unteren Befestigungsvorrichtung (6) befestigten unteren Moduls (Module) (2) repräsentativen Signale einzustellen, wobei die zweite Vielzahl von Aktoren (81) angeordnet ist, um die Geometrie des (der) an der oberen Befestigungsvorrichtung (5) befestigten oberen Moduls (Module) (3) anhand der für die Verformung des (der) an der oberen Befestigungsvorrichtung (5) befestigten oberen Moduls (Module) (3) repräsentativen Signale einzustellen.

6. System nach einem der Ansprüche 3 bis 5,
**dadurch gekennzeichnet, dass** die untere Befestigungsvorrichtung (6) ein Gitter (9) umfasst, das durch die zweite Vielzahl von Aktoren (82) am mittleren Teil (41) des Arms (4) befestigt ist, wobei das Gitter (9) dazu bestimmt ist, ein oder mehrere zu manipulierende untere Module (2) zu befestigen.

7. System nach einem der Ansprüche 3 bis 6,
**dadurch gekennzeichnet, dass** die obere Befestigungsvorrichtung (5) eine Vielzahl von Trägern (10) umfasst, die durch die erste Vielzahl von Aktoren (81) am mittleren Teil (41) des Arm (4) befestigt sind, wobei die Vielzahl von Trägern (10) dazu bestimmt ist, ein oder mehrere zu manipulierende obere Module (3) zu befestigen.

8. System nach einem der Ansprüche 1 bis 7,
**dadurch gekennzeichnet, dass** es ferner eine Vorrichtung (11) zu Befördern des Werkzeugsystems (1) aufweist, die dazu bestimmt ist, das Werkzeugsystem (1) auf der Bewegungsebene (P) zu bewegen und zu führen, wobei die erste Haltevorrichtung (7) des Arms (4) zwischen dem Arm (4) und der Beförderungsvorrichtung (11) montiert ist.

9. System nach Anspruch 8,
**dadurch gekennzeichnet, dass** es ferner zumindest einen Abstandssensor umfasst, der dazu bestimmt ist, Signale zu erzeugen, die für einen Abstand (d) zwischen dem oberen Modul (den oberen Modulen) (3) und/oder dem unteren Modul (den unteren Modulen) (2), das (die) am Arm und/oder am Werkzeugsystem (1) befestigt ist (sind), einerseits, und der Aufnahme (13) andererseits repräsentativ sind, wobei die Beförderungsvorrichtung (11) und die erste Haltevorrichtung (7) angeordnet sind, um die Positionierung des unteren Moduls (der unteren Module) (3) und/oder des oberen Moduls (der oberen Module) (2) in Bezug auf die Aufnahme (13) zum Einführen des Moduls (der Module) (2, 3) in die Aufnahme (13) zu steuern.

10. System nach einem der Ansprüche 1 bis 9,
**dadurch gekennzeichnet, dass** der Arm (4) eine Lauffläche (12) umfasst, die dazu bestimmt ist, zumindest eine Bedienperson aufzunehmen.

11. Verfahren zur Verwendung des Werkzeugsystems nach einem der Ansprüche 1 bis 10 zum Einführen zumindest eines oberen Moduls (3) und/oder zumindest eines unteren Moduls (2) in eine Aufnahme (13) zur Befestigung in der Aufnahme (13), wobei das Verfahren **dadurch gekennzeichnet ist, dass** es zumindest einen der beiden folgenden Schritte umfasst:
- einen Schritt (E1) der Befestigung des oberen Moduls (der oberen Module) (3) am Arm (4) in der oberen Ebene durch die obere Befestigungsvorrichtung (5);
- einen Schritt (E2) der Befestigung des unteren Moduls (der unteren Module) (2) am Arm (4) in der unteren Ebene durch die untere Befestigungsvorrichtung (6); wobei das Verfahren ferner zumindest einen Schritt (E3) der Positionierung des Arms (4) durch die erste Haltevorrichtung (7) zum Einführen des Moduls (der Module) (2, 3) in die Aufnahme (13) umfasst.

12. Verfahren nach Anspruch 11,
**dadurch gekennzeichnet, dass** es ferner einen Schritt (E4) der Einstellung der Geometrie des unteren Moduls (der unteren Module) (2) durch die zweite Haltevorrichtung (43) mit Hilfe der ersten Vielzahl von Aktoren (82) und/oder einen Schritt (E5) der Einstellung der Geometrie des oberen Moduls (der oberen Module) (3) durch die dritte Haltevorrichtung (42) mit Hilfe der zweiten Vielzahl von Aktoren (81) umfasst.

13. Verfahren nach einem der Ansprüche 11 oder 12, **dadurch gekennzeichnet, dass** es ferner Folgendes umfasst:
- einen Schritt (E6) der Bewegung des Werkzeugsystems (1) durch die Beförderungsvorrichtung (11), so dass das Werkzeugsystem (1) zum Eingang der Aufnahme (13) gebracht wird;
- einen Schritt (E7) der Einführung und Ausrichtung des oberen Moduls (der oberen Module) (3) und/oder des unteren Moduls (der unteren Module) (2), der darin besteht, das obere Modul (die oberen Module) (3) und/oder das untere Modul (die unteren Module) (2) mit Hilfe der ersten Haltevorrichtung (7) in Bezug auf die Aufnahme (13) auszurichten, und der Einführung des oberen Moduls (der oberen Module) (3) und/oder des unteren Moduls (der unteren Module) (2) mit Hilfe der Beförderungsvorrichtung (11).

14. Verfahren nach einem der Ansprüche 11 bis 13, **dadurch gekennzeichnet, dass** es ferner Folgendes umfasst:
- einen Schritt (E8) der Positionierung des oberen Moduls (der oberen Module) (3) und/oder des unteren Moduls (der unteren Module) (2) in der Aufnahme (13) und
- einen Schritt (E9) der Befestigung des oberen Moduls (der oberen Module) (3) und/oder des unteren Moduls (der unteren Module) (2) in der Aufnahme (13).

## Claims

1. Mobile machinery system intended for the manipulation, on a displacement surface (P) of at least one upper module (3) and/or at least one lower module (2) to be introduced into a housing (13) in order to be fixed in the housing,
the system comprising:
- an arm (4) having an upper fixing device (5) arranged to fix to the arm (4) in an upper plane at least one upper module (3) to be manipulated and a lower fixing device (6) arranged to fix to the arm (4) in a lower plane at least one lower module (2) to be manipulated, the arm (4) being intended to be introduced into the housing (13) with the upper module or modules (3) and/or the lower module or modules (2);
- a first securing device (7) of the arm (4) intended to control the positioning of the arm (4);
the arm (4) being mounted cantilever-fashion on the first securing device (7), the first securing device (7) comprising a hexapod platform on which the arm (4) is mounted.

2. System according to Claim 1,
**characterized in that** the arm (4) comprises:
- a central part (41),
- a second securing device (43) intended to fix the lower fixing device (6) to the central part (41),
- a third securing device (42) intended to fix the upper fixing device (5) to the central part (41).

3. System according to Claim 2,
**characterized in that** the second securing device (43) comprises a first plurality of actuators (82) and the third securing device (42) comprises a second plurality of actuators (81).

4. System according to Claim 3,
**characterized in that** it comprises at least one inclination sensor intended to generate signals representative of the inclination of the upper plane and of the lower plane relative to the displacement plane (P), the first securing device (7) and/or the pluralities of actuators (81, 82) being arranged to control the inclination of the upper plane and of the lower plane relative to the displacement plane (P) based on the signals representative of the inclination of the upper plane and of the lower plane relative to the displacement plane (P).

5. System according to either one of Claims 3 and 4, **characterized in that** it comprises at least one deformation sensor intended to generate signals representative of the deformation of the lower module or modules (2) fixed to the lower fixing device (6) and/or of the upper module or modules (3) fixed to the upper fixing device (5), the first plurality of actuators (82) being arranged to adjust the geometry of the lower module or modules (2) fixed to the lower fixing device (6) based on the signals representative of the deformation of the lower module or modules (2) fixed to the lower fixing device (6), the second plurality of actuators (81) being arranged to adjust the geometry of the upper module or modules (3) fixed to the upper fixing device (5) based on the signals representative of the deformation of the upper module or modules (3) fixed to the upper fixing device (5).

6. System according to any one of Claims 3 to 5, **characterized in that** the lower fixing device (6) comprises a grating (9) fixed to the central part (41) of the arm (4) by the second plurality of actuators (82), the grating (9) being intended to fix one or more lower modules (2) to be manipulated.

7. System according to any one of Claims 3 to 6, **characterized in that** the upper fixing device (5) comprises a plurality of supports (10) fixed to the central part (41) of he arm (4) by the first plurality of actuators (81), the plurality of supports (10) being intended to fix one or more upper modules (3) to be manipulated.

8. System according to any one of Claims 1 to 7, **characterized in that** it further comprises a rolling device (11) for the machinery system (1) intended to displace and guide the machinery system (1) on the displacement surface (P), the first securing device (7) of the arm (4) being mounted between the arm (4) and the rolling device (11).

9. System according to Claim 8,
**characterized in that** it further comprises at least one distance sensor intended to generate signals representative of a distance (d) between, on the one hand, the upper module or modules (3) and/or the lower module or modules (2) fixed to the arm and/or the machinery system (1) and, on the other hand, the housing (13), the rolling device (11) and the first securing device (7) being arranged to control the positioning of the lower module or modules (3) and/or of the upper module or modules (2) relative to the housing (13) to insert the module or modules (2, 3) into the housing (13).

10. System according to any one of Claims 1 to 9, **characterized in that** the arm (4) comprises a walkway (12) intended to receive at least one operator.

11. Method for using the machinery system according to any one of Claims 1 to 10 to introduce at least one upper module (3) and/or at least one lower module (2) into a housing (13) in order to be fixed in the housing (13), the method being **characterized in that** it comprises at least one of the following two steps:
- a step (E1) of fixing of the upper module or modules (3) to the arm (4), in the upper plane, by the upper fixing device (5);
- a step (E2) of fixing of the lower module or modules (2) to the arm (4), in the lower plane, by the lower fixing device (6);
the method also comprising at least one step (E3) of positioning of the arm (4) by the first securing device (7) to introduce the module or modules (2, 3) into the housing (13).

12. Method according to Claim 11,
**characterized in that** it also comprises a step (E4) of adjustment of the geometry of the lower module or modules (2) by the second securing device (43) using the first plurality of actuators (82) and/or a step (E5) of adjustment of the geometry of the upper module or modules (3) by the third securing device (42) using the second plurality of actuators (82).

13. Method according to either one of Claims 11 and 12, **characterized in that** it also comprises:
- a step (E6) of displacement of the machinery system (1) by the rolling device (11) so that the machinery system (1) is brought to the entry of the housing (13);
- a step (E7) of introduction and of alignment of the upper module or modules (3) and/or of the lower module or modules (2) consisting in aligning the upper module or modules (3) and/or the lower module or modules (2) relative to the housing (13) using the first securing device (7) and of introduction of the upper module or modules (3) and/or of the lower module or modules (2) using the rolling device (11).

14. Method according to any one of Claims 11 to 13, **characterized in that** it also comprises:
- a step (E8) of positioning in the housing (13) of the upper module or modules (3) and/or of the lower module or modules (2), and
- a step (E9) of fixing in the housing (13) of the upper module or modules (3) and/or of the lower module or modules (2).
